# EUROPÄISCHE PATENTANMELDUNG

(11) **EP 4 764 433 A1**
(43) Veröffentlichungstag der Anmeldung: **24.06.2026**
(21) Anmeldenummer: 25202820.4
(22) Anmeldetag: 17.09.2025
(51) Int. Cl.: G01J 3/46, G01J 3/50, G06N 3/126

(54) **VERFAHREN ZUR BESTIMMUNG DER FARBREZEPTUR EINER ZIELFARBE**

(30) Priorität: 20.12.2024 DE 102024139452
(71) Anmelder: Synnotech AG, 93049 Regensburg (DE)
(72) Erfinder: Kehrls, Markus, 93049 Regensburg (DE)
(74) Vertreter: Glück Kritzenberger Patentanwälte PartGmbB

(57) **Zusammenfassung**

Die Erfindung betrifft ein Verfahren zur Bestimmung der Farbrezeptur einer Zielfarbe, umfassend die Abfolge folgender Verfahrensschritte:
a) über ein Spektralphotometer (42) wird eine Remissionskurve der Zielfarbe erfasst,
b) mittels eines Optimierungsalgorithmus (44) wird
b1) zufällig oder unter Verwendung einer Anfangsfarbrezeptur aus einem neuronalen Netz (46), welche(s) Korrelationen von Remissionskurven und Farbrezepturen enthält, oder
b2) unter Berücksichtigung einer vorher durch den Optimierungsalgorithmus (44) erzeugten Farbrezeptur
eine Farbrezeptur erzeugt,
c) die erzeugte Farbrezeptur wird dem neuronalen Netz (46) zugeführt, das aus der erzeugten Farbrezeptur die zugehörige Remissionskurve bestimmt,
d) die Übereinstimmung zwischen der Remissionskurve der Zielfarbe und der Remissionskurve der erzeugten Farbrezeptur wird bewertet,
e) basierend auf der Bewertung wird entweder die erzeugte Farbrezeptur als Ergebnis-Farbrezeptur ausgegeben oder das Ergebnis der Bewertung wird unter Zurückverzweigung zu Schritt b2) dem Optimierungsalgorithmus (44) zur weiteren Optimierung übermittelt.

## Beschreibung

Die vorliegende Erfindung betrifft ein Verfahren zur Bestimmung der Farbrezeptur für eine Zielfarbe. Diese wird von einer Zieloberfläche mittels eines Spektralphotometers aufgenommen. Es sind bereits Systeme zur Optimierung von Farbrezepturen bekannt, die mittels Spektralphotometrie den Remissionswert einer Farbe bestimmen. Bei diesem Verfahren wird anschließend eine Farbrezeptur aus einer Datenbank abgeleitet, die durch lineare Optimierung oder einfache Algorithmen angepasst wird. In der Regel werden die aus der Datenbank abgeleiteten Farbrezepturen physisch geprüft, um deren Übereinstimmung mit der Zielfarbe zu prüfen, gefolgt von weiteren Optimierungen und Anpassungen. Derartige Systeme sind beispielsweise in der EP 2 149 038 B1 und in der WO 2009/075728 A1 beschrieben. Gerade die physischen Prüfungen im Rahmen der Optimierung sind zeit- und kostenaufwändig.

Die vorliegende Erfindung hat die Aufgabe, eine Farbrezeptur für eine Zielfarbe ohne die oben beschriebenen Nachteile des Standes der Technik zu bestimmen. Diese Aufgabe wird durch ein Verfahren mit den Merkmalen des Anspruchs 1 gelöst. Vorteilhafte Weiterbildungen der Erfindung sind Gegenstand der abhängigen Ansprüche. Vorteilhafte Weiterbildungen der Erfindung sind auch in der Beschreibung und in den Figuren beschrieben.

Erfindungsgemäß wird in einem ersten Schritt a) über einen optischen Detektor, insbesondere ein Spektralphotometer wenigstens eine Remissionskurve der Zielfarbe erfasst. Es ist hierbei prinzipiell möglich, die Remissionskurve unter unterschiedlichen Winkeln des Detektors bzw. Spektralphotometers zur die Zielfarbe tragenden Oberfläche aufzunehmen, wodurch unterschiedliche Remissionskurven in Abhängigkeit von dem Aufnahmewinkel erzeugt werden.

Nun wird in einem zweiten Schritt b) unter Verwendung eines Optimierungsalgorithmus eine Farbrezeptur erzeugt. Falls es die erste vom Optimierungsalgorithmus erzeugte Farbrezeptur ist, stellt der Verfahrensschritt b1) unterschiedliche Möglichkeiten für einen Beginn des Optimierungsverfahrens zur Verfügung. Gemäß einer ersten Alternative kann die "erste" Farbrezeptur durch den genetischen Algorithmus rein zufällig erzeugt werden.

Alternativ dazu kann die Optimierung etwas zielgerichteter gestartet werden, wenn über ein Neuronales Netz und/oder eine Datenbank, welche(s) eine Korrelation von Remissionskurven und Farbrezepturen enthält, aus der aufgenommenen Remissionskurve eine Anfangsfarbrezeptur erstellt wird, von welcher der Optimierungsalgorithmus dann mit der Erzeugung und Optimierung von Farbrezepturen startet. Der Optimierungsalgorithmus kommt auf diese Weise schneller zu einer Zielrezeptur, welche eine geforderte Übereinstimmung der Remissionskurve(n) der erzeugten Farbrezeptur zur Remissionskurve der Zielfarbe aufweist.

Falls der Optimierungsalgorithmus bereits vorher eine Farbrezeptur erstellt hat, welche noch nicht als Zielfarbe bewertet worden ist, wird als Verfahrensschritt b2) die vom Optimierungsalgorithmus bereits erstellte Farbrezeptur zusammen mit ihrem Bewertungsergebnis dem Optimierungsalgorithmus wieder zugeführt, um eine neue Generation einer Farbrezeptur zu erzeugen. Die Bewertung wird dabei in einer Kostenfunktion des Optimierungsalgorithmus verwertet. Die Optimierung erfolgt in einem Optimierungsalgorithmus immer nach vorgegebenen Optimierungskriterien, welche sich in einer Kostenfunktion des Optimierungsalgorithmus niederschlagen. Ein notwendiges Kriterium ist die Übereinstimmung der Remissionskurve der erzeugten Farbrezeptur mit der Remissionskurve der Zielfarbe. Dieses Kriterium ist letztlich dafür verantwortlich, dass der Optimierungsalgorithmus die Farbrezepturen in Richtung einer möglichst hohen Übereinstimmung mit der Zielfarbe optimiert. Falls mehrere Remissionskurven unter verschiedenen Winkeln aufgenommen wurden, können natürlich - mit beliebiger Gewichtung - alle diese Remissionskurven als Optimierungskriterien in die Kostenfunktion des Optimierungsalgorithmus mit einfließen.

Im folgenden Schritt c) wird die vom Optimierungsalgorithmus erzeugte Farbrezeptur der Datenbank bzw. dem neuronalen Netz zugeführt, die/das aus der erzeugten Farbrezeptur die zugehörige Remissionskurve bestimmt. Ein neuronales Netz ist gegenüber einer reinen Datenbank vorteilhaft, weil diese eine Lernfunktion aufweist. So kann vorzugsweise das neuronale Netz laufend mit den Ergebnissen des erfindungsgemäßen Farbbestimmungsverfahren gespeist werden, wodurch die Zuordnungsergebnisse zwischen Farbrezeptur und Remissionskurve ständig verbessert werden.

Anschließend wird in Schritt d) die Übereinstimmung zwischen der Remissionskurve der Zielfarbe und der Remissionskurve der erzeugten Farbrezeptur bewertet. Dies passiert vorzugsweise im Optimierungsalgorithmus, welcher basierend auf der Differenz zwischen der Remissionskurve der Zielfarbe und der Remissionskurve der letzten erzeugten Farbrezeptur, zum Beispiel aus der Kostenfunktion des genetischen Algorithmus, eine Bewertung zuordnet. Eine derartige Bewertung könnte alternativ aber auch durch das neuronale Netz durchgeführt werden, dem eine entsprechende Intelligenz inhärent ist.

Im letzten Schritt e) wird entweder diese Bewertung vom Optimierungsalgorithmus, insbesondere basierend auf der Kostenfunktion, als innerhalb eines vorgegebenen Grenzwertes liegend betrachtet und dann als der Farbrezeptur der Zielfarbe am nächsten kommende Ergebnis-Farbrezeptur ausgegeben oder die erzeugte Farbrezeptur entspricht noch nicht den geforderten Eigenschaften und wird dann zusammen mit ihrem Bewertungsergebnis wieder im Verfahrensschritt b2) dem Optimierungsalgorithmus zur Erzeugung einer neuen Generation einer Farbrezeptur zugeführt.

Dieses Optimierungsverfahren wird dann so lange durchgeführt, bis eine erzeugte Farbrezeptur als Ergebnis-Farbrezeptur ausgegeben wird, die innerhalb des vorbestimmten Grenzwertes liegt und somit eine hohe Übereinstimmung mit der Zielfarbe aufweist. Es kann wahlweise auch vorgesehen sein, das Verfahren nach einer vorbestimmten Maximalzahl von Optimierungsschritten (erzeugte Generationen) oder nach einer vorgegebenen maximalen Optimierungszeit ergebnislos abzubrechen, in welchem Fall die dem System zugeführten Parameter überprüft werden müssten.

Das erfindungsgemäße Verfahren nützt prinzipiell einen anderen Weg als die bekannten Verfahren, die immer von den Remissionskurven ausgehen, diese optimieren und dann aus einer Datenbank die den veränderten Remissionskurven zugeordneten Farbrezepturen ableiten und diese physisch austesten. Die vorliegende Erfindung geht hierbei einen umgekehrten Weg. Nach Erfassung der Remissionskurve der Zielfarbe wird nur optional und nur ein einziges Mal aus der Remissionskurve über die Datenbank oder dem neuronalen Netz eine Farbrezeptur abgeleitet. Diese wird dann optimiert. Aus den in den verschiedenen Optimierungsgenerationen erzeugten Farbrezepturen werden dann immer mittels der Datenbank oder dem neuronalen Netzwerk die zugeordneten Remissionskurven abgeleitet und eine Bewertung im Optimierungsalgorithmus über die Übereinstimmung bzw. die Unterschiede zwischen der Remissionskurve der Zielfarbe und der erzeugten Farbrezeptur. Im Laufe der weiteren Optimierung wird immer die Farbrezeptur angepasst und deren Auswirkung auf die Remissionskurve überprüft.

Durch die Erfindung wird somit ein virtuelles Farbmischsystem bereitgestellt, das eine Farbrezeptur anhand der Kombination einer Datenbank/eines neuronalen Netzes und eines Optimierungsalgorithmus, insbesondere eines genetischen Algorithmus, optimiert. Physische Tests werden erst nach Abschluss des Optimierungsprozesses durchgeführt, was Material, Zeit und Personalaufwand spart, insbesondere gegenüber dem oben zitierten Stand der Technik. Die Erfindung verwendet zwei Module, nämlich als erstes Modul eine Datenbank beziehungsweise eines neuronalen Netzes, welche lediglich dazu dient, aus einer Farbrezeptur eine Remissionskurve zu bestimmen. Die Verwendung eines neuronalen Netzes hat, wie oben bereits angedeutet, gegenüber der Datenbank den Vorteil einer Selbstlernfähigkeit und Eigenoptimierung. Bei der Anwendung des erfindungsgemäßen Farbbestimmungsverfahrens wird somit die Zuordnung einer oder mehrerer Farbrezepturen zu einer Remissionskurve immer besser. Dieses erste Modul ist ein reines Hilfsmodul, welches durch das wesentliche zweite Modul, nämlich den Optimierungsalgorithmus, verwendet wird.

Der Optimierungsalgorithmus ermittelt ständig neue Farbrezepturen und lässt mittels des ersten Moduls aus den erzeugten Farbrezepturen die Remissionskurve bestimmen. Eine Kostenfunktion des Optimierungsalgorithmus, insbesondere genetischen Algorithmus, verwendet den Unterschied bzw. die Übereinstimmung zwischen der Ziel-Remissionskurve und der Remissionskurve der zuletzt erzeugten Farbrezeptur, wobei die Farbrezepturen und Remissionskurven der vorherigen Generationen des Optimierungsprozesses bei der Optimierung berücksichtigt werden. Dies erlaubt am Ende des Optimierungsprozesses eine hohe Übereinstimmung der letztlich erzeugten Farbrezeptur mit der gewünschten Zielfarbe unter Minimierung der Kosten, da physische Überprüfungen, wie z.B. Auslackieren der erzeugten Ergebnis-Farbrezeptur, erst am Ende des Optimierungsprozesses durchgeführt werden müssen.

Vorzugsweise wird als Optimierungsalgorithmus ein genetischer Algorithmus verwendet, der beispielsweise den Vorteil hat, dass die erste Vorabrezeptur rein zufällig erzeugt werden kann. Zudem sind genetische Algorithmen als Optimierungsalgorithmen inzwischen als sehr nutzbringend und zuverlässig eingeführt.

Der Optimierungsalgorithmus kann vorzugsweise nach unterschiedlichen Kriterien optimieren: Das wichtigste Kriterium ist die Identität der Remissionskurven von erzeugter Farbrezeptur und Zielfarbe.

Ein weiteres Optimierungskriterium wäre die Anzahl der Farbkomponenten. Man könnte so zum Beispiel versuchen, die Anzahl der Farbkomponenten zu minimieren, um den Herstellungsaufwand für die Farbe und/oder deren Beschaffungskosten zu minimieren.

Ein weiteres Kriterium wären die Kosten der Farbrezeptur. Diese unterschiedlichen Kriterien können auch miteinander gemeinsam unter Gewichtung der unterschiedlichen Kriterien angewandt werden, um eine Farbrezeptur für eine Zielfarbe zu erreichen. Es ist hierbei klar, dass eine Optimierung nach den Kriterien Anzahl der Farbkomponenten oder Kosten der Farbrezeptur auf Kosten der Identität der Remissionskurven geht. Hier liegt es an der Gewichtung, diese Kriterien in einer sinnvollen gewinnbringenden Weise zu kombinieren.

Wie oben bereits zum Ausdruck gebracht, können von der Zielfarbe mehrere Remissionskurven unter unterschiedlichen Winkeln des Spektralphotometers zur der die Zielfarbe tragenden Oberfläche erfasst werden. In diesem Fall sollte die Datenbank beziehungsweise das neuronale Netz neben der Korrelation von Farbrezepturen und Remissionskurven auch die Erfassungswinkel der Remissionskurven relativ zur Oberfläche der Zielfarbe mit einbinden, so dass auch die Spektralwirkung der erzeugten Farbrezeptur unter verschiedenen Winkeln der Zielfarbe angeglichen beziehungsweise dahin optimiert werden kann. Auch hier sind Gewichtungen zwischen den unterschiedlichen Winkeln über die Kostenfunktion des Optimierungsalgorithmus möglich.

Vorzugsweise wird die Bewertung in Schritt d), das heißt die Bewertung der Übereinstimmung zwischen der Remissionskurve der Zielfarbe und der erzeugten Farbrezeptur, durch den genetischen Algorithmus vorgenommen, welcher dieses Ergebnis dann gleich in das weitere Optimierungsverfahren einfließen lassen kann.

Das vorliegende Verfahren erlaubt nicht nur die Optimierung einer Farbrezeptur auf eine Zielfarbe hin, sondern auch die Optimierung auf eine Zielfarbe, welche Effektpartikel aufweist. Für die Optimierung der Effektpartikel wird ein bildgebende Erfassungsverfahren genutzt, in der Regel eine Photographie. Diese wird beispielsweise durch einen Effekt-Algorithmus vorzugsweise auf die Anzahl, die Größe und Verteilung der Effektpartikel in der die Zielfarbe tragenden Oberfläche hin analysiert.

Für die Optimierung der Effektpartikel muss die Datenbank/das neuronale Netz dann neben der Korrelation von Farbrezepturen und Remissionskurven auch eine Korrelation von Farbrezepturen und Effekt-Parametern enthalten.

Ebenso muss der Optimierungsalgorithmus in der Lage sein, die Farbrezeptur zusätzlich auf Effektparameter, z.B. die Größe, Anzahl und Verteilung der Effektpartikel, zu optimieren. Das erfindungsgemäße Verfahren ist damit insbesondere für den Kraftfahrzeugbereich geeignet, bei welchem neben normalen Farbrezepturen auch Effektpartikel, wie zum Beispiel Metallic oder Perlglanz, berücksichtigt werden müssen. In einer Weiterbildung kann das erfindungsgemäße Verfahren auch allein für die Optimierung von Effektpartikeln verwendet werden, wenn die Farbrezeptur bekannt ist.

In einer vorteilhaften Weiterbildung der Erfindung variiert der Optimierungsalgorithmus im Rahmen der Optimierung die Anteile der Farbkomponenten systematisch, um damit eine zielgerichtete und stringente Optimierung zu schaffen, die schnell und in definierter Weise für die Erzeugung neuer Optimierungsgenerationen verwendet werden können.

Selbstverständlich ist das oben beschriebene Verfahren nicht auf den Bereich der Lackrezepturen für Fahrzeuglackierungen in der Automobilindustrie beschränkt, sondern kann auch für alle anderen Anwendungsgebiete, wie zum Beispiel Optimierung von Dispersionsfarben an Gebäuden etc., verwendet werden.

Die Erfindung betrifft auch eine Vorrichtung zur Bestimmung einer Farbrezeptur, umfassend ein neuronales Netzwerk bzw. eine Datenbank und einen Optimierungsalgorithmus, insbesondere genetischen Algorithmus, die zur Durchführung des oben beschriebenen Verfahrens zusammenwirken.

Folgende Ausdrücke werden synonym verwendet: Ergebnis-Farbrezeptur - optimierte Farbrezeptur, die als Ergebnis des Optimierungsprozesses erhalten wird, um die Zielremissionskurve der Zieloberfläche nachzubilden; Optimierungsalgorithmus - genetischer Algorithmus; erstellt - erzeugt; Bestimmen - Ermitteln;

Die Erfindung wird nun beispielsweise anhand der schematischen Zeichnung beschrieben. In dieser zeigen:
- Fig. 1: ein Ablaufdiagramm eines Verfahrens zur Optimierung einer Farbrezeptur,
- Fig. 2: ein Ablaufdiagramm eines Verfahrens zur Optimierung einer Effektkomponenten enthaltenden Farbrezeptur, und
- Fig.3: eine schematische Darstellung einer Vorrichtung zur Bestimmung einer Farbrezeptur in dem Verfahren gemäß den Figuren 1 und 2.

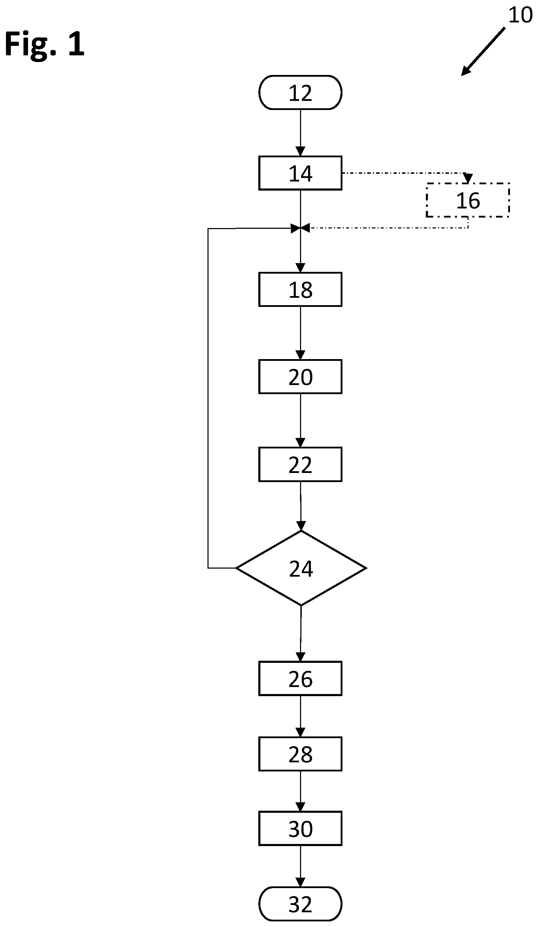

Das in Fig. 1 gezeigte Verfahren 10 zur Bestimmung einer Farbrezeptur beginnt am Startpunkt 12. Als erster Schritt 14 wird eine Zieloberfläche, z.B. eines nachzulackierenden Kraftfahrzeugs, mit einem optischen Detektor, insbesondere einem Spektralphotometer aufgenommen, wobei die Remissionskurve der Zielfarbe erhalten wird. Es ist prinzipiell auch möglich die Aufnahme der Zieloberfläche und die Auswertung zum Erhalt der Remissionskurve örtlich und/oder zeitlich zu trennen. Im nächsten Schritt 18 startet ein Optimierungsalgorithmus, im vorliegenden Fall ein genetischer Algorithmus, mit der Bestimmung/Ermittlung und Optimierung einer Farbrezeptur. Er kann starten, indem er am Anfang eine zufällig gewählte Farbrezeptur nimmt. Optional kann in einem Zwischenschritt 16 die Remissionskurve der Zielfarbe, die im ersten Verfahrensschritt 14 erhalten wurde, einem neuronalen Netz zugeführt werden, mittels welchem aus der Remissionskurve eine geeignete Startrezeptur ermittelt wird, von welcher der genetische Algorithmus im zweiten Verfahrensschritt 18 dann zur Erstellung einer Farbrezeptur startet. Aufgrund der näher an der Zielrezeptur liegenden Startrezeptur wird die Optimierung zum Erhalt einer Zielrezeptur etwas beschleunigt.

Die vom genetischen Algorithmus im zweiten Verfahrensschritt 18 erzeugte Farbrezeptur wird im dritten Verfahrensschritt 20 dem im Zwischenschritt 16 bereits beschriebenen neuronalen Netz zugeführt, welches aus der erzeugten Farbrezeptur die zugeordnete Remissionskurve bestimmt. Der dritte Verfahrensschritt 20 entspricht somit dem Verfahrensschritt c) der Erfindung entsprechend dem Anspruchs 1 der vorliegenden Anmeldung.

Im vierten Verfahrensschritt 22 wird entsprechend dem Verfahrensschritt d) der Erfindung die Übereinstimmung zwischen der Remissionskurve der Zielfarbe und der erzeugten Farbrezeptur bewertet. Vorzugsweise erfolgt diese Bewertung durch den genetischen Algorithmus, ist aber prinzipiell auch durch das neuronale Netz möglich. Ein Bewertungskriterium für die Übereinstimmung kann hierbei sein, ob der Unterschied zwischen der Remissionskurve der Zielfarbe und der erzeugten Farbrezeptur unter einem Schwellwert liegt.

Im Entscheidungsschritt 24 entsprechend dem Verfahrensschritt e) aus Anspruch 1 wird, wenn die Bewertung d) in dem Bewertungsschritt 22 zutage brachte, dass die Übereinstimmung der Remissionskurven zwischen zuletzt erzeugter Farbrezeptur und Zielfarbe ausreichend ist, die zuletzt erzeugte Farbrezeptur, d.h. die Farbrezeptur der letzten Optimierungsgeneration, im Verfahrensschritt 26 als Ergebnis-Farbrezeptur ausgegeben. Daraufhin wird in Schritt 28 die physische Mischung der Farben entsprechend der Ergebnis-Farbrezeptur vorgenommen. Diese wird im nachfolgenden Verfahrensschritt 30 auslackiert und final gemessen, wonach das Verfahren im Endschritt 32 endet. Der Entscheidungsschritt 24 erfolgt vorzugsweise am Ort der Bewertung, vorzugsweise im genetischen Algorithmus.

Sollte sich in dem Entscheidungsschritt 24 nach der Bewertung herausstellen, dass die erzeugte Farbrezeptur von der Remissionskurve der Ergebnis-Farbrezeptur noch zu sehr abweicht, d.h. außerhalb des zulässigen Schwellwerts einer zulässigen Abweichung liegt, so verzweigt das Verfahren zurück zum zweiten Verfahrensschritt 18 gemäß dem Verfahrensschritt b2) der Erfindung, in welchem dem genetischen Algorithmus die letzte erzeugte Farbrezeptur und die zugeordnete Bewertung übermittelt wird,

Hier erzeugt der Optimierungsalgorithmus unter Berücksichtigung des Ergebnisses der Bewertung der vorher erzeugten Farbrezeptur eine nächste Generation einer Farbrezeptur, wobei durch die Berücksichtigung der Bewertung die Zielrichtung der Optimierung verbessert wird.

Diese Schleife vom Entscheidungsschritt 24 zum Verfahrensschritt 18 wird so lange wiederholt, bis im Entscheidungsschritt 24 die Remissionskurve der erzeugte Farbrezeptur hinsichtlich der Übereinstimmung der Remissionskurven und eventueller zusätzlicher Bewertungskriterien innerhalb des Schwellwertes liegt und damit in der Ausgabe der Ergebnis-Farbrezeptur in Schritt 26 enden kann.

Mögliche weitere Zielkriterien neben der Übereinstimmung der Remissionskurven zwischen der Zielfarbe und der erzeugten Farbrezeptur sind hierbei beispielsweise die Anzahl der Farbkomponenten und/oder die Kosten der Farbrezeptur.

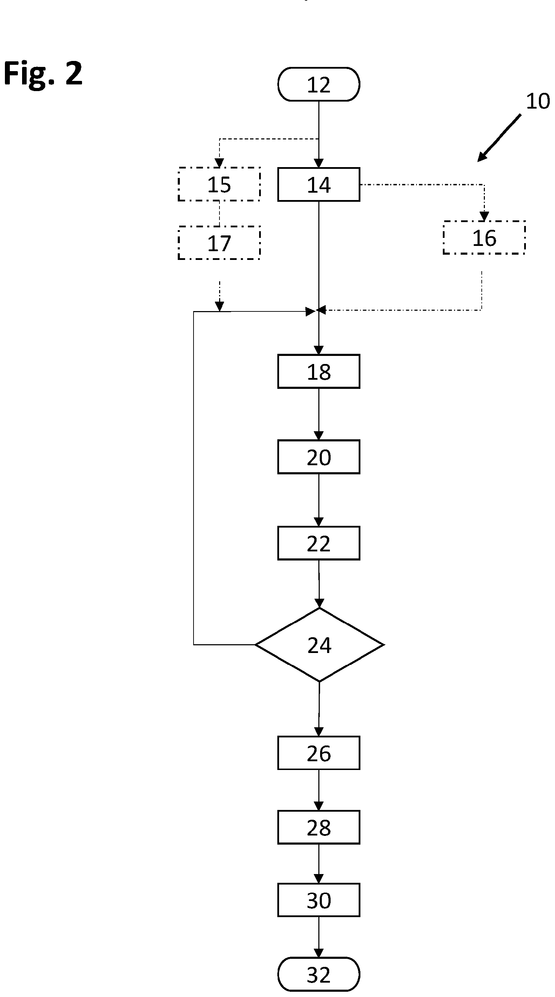

Fig. 2 stellt einen weiteren Aspekt dar, der durch die vorliegende Erfindung optimiert werden kann, nämlich die Einbringung von Effektpartikeln. Zu Fig. 1 identische oder funktionsgleiche Verfahrensschritte sind dabei mit den identischen Bezugszeichen beschrieben.

Falls es sich bei der nachzubildenden Farbe um eine Effektfarbe, zum Beispiel um eine Farbe mit Perlglanzeffekt oder Metalliceffekt handelt, wie sie im Automobilbereich gängig sind, kann zusätzlich zur Aufnahme der Ziel-Oberfläche durch das Spektralphotometer in Verfahrensschritt 14 die Zielfarbe mit einer Kamera in einem zusätzlichen Verfahrensschritt 15 fotografiert werden. Diese fotografische Aufnahme wird daraufhin zur Analyse einem Effekt-Algorithmus 17 zugeführt, der aus der Aufnahme z.B. die Art, Dichte und Größe der Effektpartikel als Ziel-Effektparameter ermittelt.

Die aus dem Effekt-Algorithmus erhaltenen Ziel-Effektparameter werden dem genetischen Algorithmus im Erstellungsschritt 18 der Farbrezeptur zugeführt. In diesem Fall ist der Optimierungsalgorithmus in der Lage, nicht nur Farbkomponenten zu optimieren, sondern auch Effektparameter, wie z.B. die Art, Größe und Verteilung der Effektpartikel zu optimieren, wobei hier die Ziel-Parameter aus dem Effekt-Algorithmus als Bewertungskriterium in der Kostenfunktion dienen. So können durch den genetischen Algorithmus zusätzlich zur Remissionskurve dann auch die Effektparameter im Verlauf des Optimierungsverfahren in den Schritten 18 bis 24 weiter optimiert werden.

Nachdem der genetische Algorithmus eine Generation einer Farbrezeptur erstellt hat, wird diese dem neuronalen Netz zugeleitet, welches in diesem Fall neben der Remissionskurve auch die Effekt-Parameter aus der erzeugten Farbrezeptur zuordnet. Hierfür enthält das neuronale Netz neben der Korrelation von Farbrezepturen und Remissionskurven auch eine Korrelation von Farbrezepturen und Effekt-Parametern.

Im nachfolgenden Bewertungsschritt wird dann nicht nur die Übereinstimmung der Remissionskurven zwischen erzeugter Farbrezeptur und Zielfarbe bewertet, sondern auch die Übereinstimmung der Effekt-Parameter der erzeugten Farbrezeptur mit den Ziel-Effektparametern. Das heißt, in dem Optimierungsverfahren bilden die Effektparameter weitere Optimierungskriterien neben der Übereinstimmung der Remissionskurven, der Anzahl der Farbkomponenten und den Kosten der Farbrezeptur.

Alternativ ist es auch möglich, den Effekt-Algorithmus in dem genetischen Algorithmus oder dem neuronalen Netz zu integrieren.

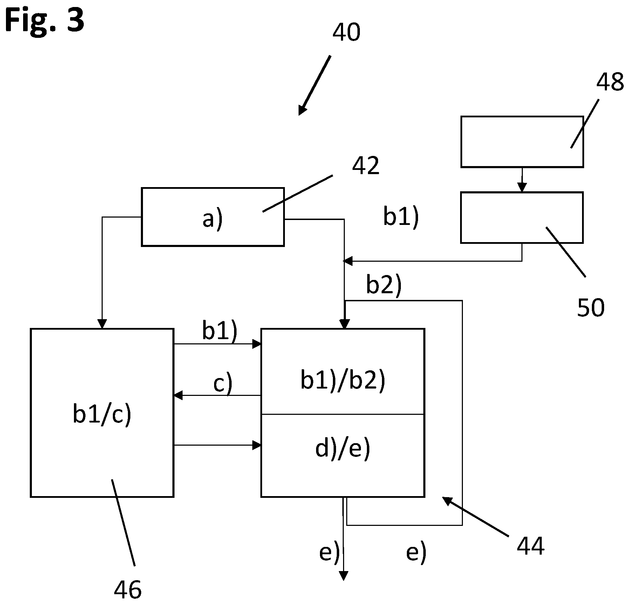

Fig.3 verdeutlich noch einmal das Zusammenspiel der unterschiedlichen Komponenten, die bei der Erstellung einer Farbrezeptur zusammenspielen, wobei die Verfahrensschritte mit Bezug zu Anspruch 1 wiedergegeben sind.

Die Vorrichtung 40 zur Erzeugung einer Farbrezeptur enthält ein Spektralphotometer 42, durch welches die Remissionskurve einer Zieloberfläche im Verfahrensschritt a) erfasst wird.

Die Remissionskurve wird dann entweder gleich dem Optimierungsalgorithmus 44 zugeführt, welcher im Schritt b1) z.B. zufällig, d.h. durch eine Random-Funktion, eine Anfangsrezeptur erstellt.

Alternativ wird die Remissionskurve im Zwischenschritt 16 dem neuronalen Netz 46 zugeleitet, der entsprechend seinen Korrelationsdaten aus der Remissionskurve eine geeignete Anfangsfarbrezeptur erstellt und dem Optimierungsalgorithmus 44 zuleitet. In diesem Fall kann der Optimierungsalgorithmus 44 dann in Schritt b1) bereits mit einer zielgerichteten Anfangsrezeptur starten und nicht mit einer Zufallsrezeptur.

Nach dem Erstellen einer Farbrezeptur in Schritt b1) wird diese vom Optimierungsalgorithmus 44 dem neuronalen Netz 46 zugeführt, welches aus der erstellten Farbrezeptur die zugehörige Remissionskurve ermittelt und wiederum dem Optimierungsalgorithmus 44 zuleitet, der den Unterschied der Remissionskurven zwischen der erstellten Farbrezeptur und der Zielfarbrezeptur gemäß Verfahrensschritt d) bewertet und gemäß Verfahrensschritt e) bei einer negativen Bewertung entweder im Verfahrensschritt b2) eine neue Generation einer Farbrezeptur erstellt, wobei das Bewertungsergebnis der vorherigen Generation(en) mit berücksichtigt wird. Falls das Bewertungsergebnis positiv ist, das heißt, wenn der Unterschied zwischen der Ziel-Remissionskurve und der Remissionskurve der erzeugten Farbrezeptur unter einem Schwellwert liegt, wird die Farbrezeptur als Ergebnis-Farbrezeptur in Schritt e) ausgegeben. Diese Farbrezeptur kann dann physisch geprüft und verarbeitet werden.

Fig. 3 zeigt darüber hinaus die Komponenten für eine zusätzliche optionale Optimierung von Effektpartikeln. Die Zieloberfläche wird in diesem Fall nicht nur mit dem Spektralphotometer 42 erfasst, sondern auch mit einer optischen Kamera 48 fotografiert. Das von der Kamera aufgenommene Foto wird einem Effekt-Algorithmus 50 zugeführt wird, welcher aus dem Foto Ziel-Effektparameter bestimmt, die dann dem Optimierungsalgorithmus 44 weitergeleitet werden, welcher die Effektparameter als weitere(n) Parameter in der Kostenfunktion bei der Optimierung verwendet. Hier ist es auch möglich, dass die Remissionskurve und die Effektparameter in Wechselwirkung treten, was durch die Kostenfunktion des Optimierungsalgorithmus 44 abgebildet werden kann.

Es ist somit festzustellen, dass die vorliegende Erfindung nicht nur die Herstellung einer Farbe nachvollziehen kann, sondern ebenfalls die Einbindung von Effektpartikeln in der Farbe. Hierbei ist noch einmal hervorzuheben, dass das gesamte Optimierungsverfahren rein virtuell abläuft und keine zwischenzeitliche physikalische Ausmischung und Lackierung erfordert, wodurch das erfindungsgemäße Verfahren schnell, effektiv und zuverlässig durchführbar ist.

Die Erfindung ist nicht auf das dargestellte Ausführungsbeispiel beschränkt, sondern kann innerhalb des Schutzbereichs der nachfolgenden Ansprüche beliebig variiert werden.

### Bezugszeichenliste:

- 10: Verfahren zur Bestimmung einer Farbrezeptur für eine Zielfarbe
- 12: Startschritt
- 14: erster Schritt - Aufnahme der Zieloberfläche mit einem Spektralphotometer
- 15: optionaler Schritt - Fotografieren der Zieloberfläche mit einer optischen Kamera
- 16: Zwischenschritt - Bestimmung einer Anfangsfarbrezeptur für den Optimierungsalgorithmus mittels des neuronalen Netzes
- 17: Ermitteln der Effektparameter aus dem Foto der optischen Kamera
- 18: Bestimmen einer Farbrezeptur durch den Optimierungsalgorithmus
- 20: Übermitteln der durch den Optimierungsalgorithmus erzeugten Farbrezeptur an das neuronale Netz, um eine korrespondierende Remissionskurve zu erhalten
- 22: Bewerten der Übereinstimmung zwischen der Remissionskurve der erzeugten Farbrezeptur mit der Remissionskurve der Zielfarbe in dem Optimierungsalgorithmus
- 24: Entscheidungsschritt, bei dem in Abhängigkeit von der Bewertung entweder die Ergebnis-Farbrezeptur ausgegeben wird oder die letzte erzeugte Farbrezeptur dem Optimierungsalgorithmus zur weiteren Optimierung zurückgeführt wird
- 26: Ausgabe der Ergebnis-Farbrezeptur
- 28: Physische Mischung der Ergebnis-Farbrezeptur
- 30: Auslackieren der physischen Mischung
- 32: Endschritt
- 40: Vorrichtung zur Bestimmung einer Farbrezeptur für eine Zielfarbe
- 42: Spektralphotometer zur Erfassung der Remissionskurve der Zielfarbe
- 44: Optimierungsalgorithmus - genetischer Algorithmus
- 46: neuronales Netz - Datenbank
- 48: optische Kamera zum Anfertigen einer Fotografie der Zielfarbe
- 50: Effekt-Algorithmus zur Bestimmung der Effektparameter der Zielfarbe aus der Fotografie

## Patentansprüche

1. Verfahren zur Bestimmung der Farbrezeptur einer Zielfarbe, umfassend die Abfolge folgender Verfahrensschritte:
a) über einen optischen Detektor (42), insbesondere ein Spektralphotometer (42) wird wenigstens eine Remissionskurve der Zielfarbe erfasst,
b) mittels eines Optimierungsalgorithmus (44) wird
b1) zufällig oder unter Verwendung einer Anfangsfarbrezeptur aus einer Datenbank/einem neuronalen Netz (46), welche(s) Korrelationen von Remissionskurven und Farbrezepturen enthält, oder
b2) unter Berücksichtigung einer vorher durch den Optimierungsalgorithmus (44) erzeugten Farbrezeptur inklusive deren Bewertungsergebnisses eine Farbrezeptur erzeugt,
c) die erzeugte Farbrezeptur wird der Datenbank/dem neuronalen Netz (46) zugeführt, die/das aus der erzeugten Farbrezeptur die zugehörige Remissionskurve bestimmt,
d) die Übereinstimmung zwischen der Remissionskurve der Zielfarbe und der Remissionskurve der erzeugten Farbrezeptur wird bewertet,
e) basierend auf dieser Bewertung wird entweder die erzeugte Farbrezeptur als Ergebnis-Farbrezeptur ausgegeben oder die erzeugte Farbrezeptur wird zusammen mit dem Ergebnis der Bewertung unter Zurückverzweigung zu Schritt b2) dem Optimierungsalgorithmus (44) zur weiteren Optimierung übermittelt.

2. Verfahren nach Anspruch 1, **dadurch gekennzeichnet, dass** als Optimierungsalgorithmus (44) ein genetischer Algorithmus verwendet wird.

3. Verfahren nach einem der vorhergehenden Ansprüche, **dadurch gekennzeichnet, dass** der Optimierungsalgorithmus (44) nach wenigstens einem der folgenden Kriterien optimiert:
- Identität der Remissionskurven von erzeugter Farbrezeptur und Zielfarbe
- Anzahl der Farbkomponenten,
- Kosten der Farbrezeptur.

4. Verfahren nach einem der vorhergehenden Ansprüche, **dadurch gekennzeichnet, dass** mehrere Remissionskurven unter unterschiedlichen Winkeln des Spektralphotometers (42) zur die Zielfarbe tragenden Oberfläche erfasst werden.

5. Verfahren nach Anspruch 4, **dadurch gekennzeichnet, dass** die Datenbank/das neuronale Netz (46) neben der Korrelation von Farbrezepturen und Remissionskurven auch den Erfassungswinkel der Remissionskurven korreliert, und dass der Optimierungsalgorithmus (44) nach der Übereinstimmung der unter unterschiedlichen Winkeln aufgenommenen Remissionskurven von erzeugter Farbrezeptur und Zielfarbe optimiert.

6. Verfahren nach einem der vorhergehenden Ansprüche, **dadurch gekennzeichnet, dass** die Bewertung in Schritt d) durch den genetischen Algorithmus vorgenommen wird.

7. Verfahren nach einem der vorhergehenden Ansprüche, **dadurch gekennzeichnet, dass** die Zieloberfläche mit einer optischen Kamera (48) fotografiert wird und das Foto in einem Effekt-Algorithmus (50) das Vorliegen von Effektpartikeln analysiert wird.

8. Verfahren nach Anspruch 7, **dadurch gekennzeichnet, dass** durch den Effekt-Algorithmus (50) die Anzahl und Verteilung der Effektpartikel auf der die Zielfarbe tragenden Oberfläche erfasst wird.

9. Verfahren nach Anspruch 7 oder 8, **dadurch gekennzeichnet, dass** die Datenbank/das neuronale Netz (46) Korrelationen zwischen Farbrezepturen und Effektpartikel enthält.

10. Verfahren nach einem der Ansprüche 7 bis 9, **dadurch gekennzeichnet, dass** der Optimierungsalgorithmus (44) die Farbrezeptur zusätzlich auf Effektparameter, insbesondere die Größe, Anzahl und Verteilung der Effektpartikel optimiert.

11. Verfahren nach einem der vorhergehenden Ansprüche, **dadurch gekennzeichnet, dass** der Optimierungsalgorithmus (44) im Rahmen der Optimierung die Anteile der Farbkomponenten systematisch variiert.

12. Verwendung des Verfahrens nach einem der vorhergehenden Ansprüche in der Automobilindustrie zur Optimierung von Lackrezepturen für Fahrzeugbeschichtungen.

13. Vorrichtung zur Bestimmung einer Farbrezeptur, umfassend ein neuronales Netz (46) bzw. eine Datenbank und einen Optimierungsalgorithmus (44), die zur Durchführung eines Verfahren nach einem der Ansprüche 1 bis 11 zusammenwirken.
